# EUROPEAN PATENT APPLICATION

(11) **EP 4 819 584 A1**
(43) Date of publication of application: **07.10.2026**
(21) Application number: 24905552.6
(22) Date of filing: 05.08.2024
(51) Int. Cl.: H04L 67/1095

(54) **BLOCKCHAIN NETWORK MANAGEMENT METHOD AND RELATED DEVICE**

(30) Priority: 18.12.2023 CN 202311743446; 22.03.2024 CN 202410338240
(71) Applicant: Huawei Cloud Computing Technologies Co., Ltd., Gui'an New District, Guizhou 550025 (CN)
(72) Inventor: ZHANG, Ziyi, Guiyang, Guizhou 550025 (CN); QU, Qiang, Guiyang, Guizhou 550025 (CN)
(74) Representative: Goddar, Heinz J.
(86) International application number: PCT/CN2024/109789
(87) International publication number: WO 2025/130056

(57) **Abstract**

A management method for a blockchain network is applied to a management system for a blockchain network. The blockchain network includes a public node pool and an external node, the management system includes a controller, a checker, and a router, and the method includes: The controller receives a node creation request. The controller creates a new node in the blockchain network in response to the node creation request, and switches, to a target node in the public node pool, traffic intended for the new node. The checker checks a status of the new node or a blockchain height of a ledger maintained by the new node. When the status of the new node or the blockchain height of the ledger maintained by the new node meets a condition, the router switches, to the new node, traffic in the blockchain network directed to the target node. In the method, the public node pool and the external node are introduced to perform data presynchronization. The new node may perform ledger synchronization based on a ledger snapshot of a node in the public node pool, without occupying consuming significant of bandwidth resources, and the ledger synchronization time may also be greatly shortened.

## Description

This application claims priorities to Chinese Patent Application No. 202311743446.9, filed with the China National Intellectual Property Administration on December 18, 2023 and entitled "BLOCKCHAIN MANAGEMENT METHOD AND RELATED DEVICE", and to Chinese Patent Application No. 202410338240.6, filed with the China National Intellectual Property Administration on March 22, 2024 and entitled "MANAGEMENT METHOD FOR BLOCKCHAIN NETWORK AND RELATED DEVICE", both of which are incorporated herein by reference in their entireties.

### TECHNICAL FIELD

This application relates to the field of blockchain technologies, and in particular, to a management method for a blockchain network, a management system for a blockchain network, a compute device cluster, a computer-readable storage medium, and a computer program product.

### BACKGROUND

Blockchain (Blockchain) is a distributed database technology in which multiple nodes in a peer-to-peer network jointly maintain, through a consensus mechanism based on cryptographic technology, a continuously growing chained ledger constructed by timestamps and orderly recorded data blocks. The blockchain enables any participating nodes to calculate, by using cryptographic algorithms, data exchanged over a period of time in the system, record the data into a data block (block), and generate a fingerprint of the data block for chaining (chain) the next data block and for checking. All participating nodes in the system collectively determine whether a record is valid.

Cloud-native blockchain nodes can provide resources to users on demand, and are therefore widely used. Specifically, a user may purchase an elastic cloud server (Elastic Cloud Server, ECS) virtual machine on a cloud platform, deploy a blockchain node on the ECS virtual machine, configure a large-capacity storage for node data synchronization, and assign an elastic IP address (Elastic IP Address, EIP) for point-to-point data transmission with other nodes in the blockchain network.

Each blockchain node needs to synchronize and transmit a large amount of data. Therefore, adding a new node to the blockchain network consumes significant bandwidth resources. For example, in a public chain, a full node typically stores about 1 terabyte (terabyte, TB) of data. A new node synchronizing 1 TB data of ledger data via point-to-point synchronization occupies substantial bandwidth, affecting normal on-chain transactions. In addition, the new node becomes available only after data synchronization is completed, which typically takes one week.

### SUMMARY

This application provides a management method for a blockchain network. In the method, a public node pool and an external node are introduced to the blockchain network to perform data presynchronization in the blockchain network. A new node created by a user may perform ledger synchronization based on a ledger snapshot of a node in the public node pool, without consuming significant bandwidth resources, and the ledger synchronization time may also be greatly shortened. In addition, during creation of a new node or ledger synchronization, traffic of the blockchain network is switched to a target node that normally runs a service in the public node pool, thereby ensuring uninterrupted service. This application further provides a management system for a blockchain network that corresponds to the foregoing method, a compute device cluster, a computer-readable storage medium, and a computer program product.

According to a first aspect, this application provides a management method for a blockchain network. The method may be applied to a management system for a blockchain network, or may be referred to as a management system for short. The management system may be a software system. The software system is used to meet a tenant service requirement by using a node pool in a multi-tenant scenario of a cloud platform. The software system may be deployed in a compute device cluster, and the compute device cluster executes program code of the software system, to perform the management method for a blockchain network in this application. In some examples, the management system may alternatively be a hardware system, for example, a compute device cluster that supports features such as quick creation of a blockchain node and second-level startup. When the compute device cluster runs, the management method for a blockchain network in this application is performed.

The blockchain network includes a public node pool and an external node, and the management system includes a controller, a checker, and a router. The controller may receive a node creation request, and then the controller creates a new node in the blockchain network in response to the node creation request, and switches, to a target node in the public node pool, traffic intended for the new node, where the public node pool is configured to perform data presynchronization with the external node in the blockchain network, and the target node is a node that normally runs a service in the public node pool. The checker checks a status of the new node or a blockchain height (which may also be referred to as a block height for short) of a ledger maintained by the new node. When the status of the new node or the blockchain height of the ledger maintained by the new node meets a condition, the router switches, to the new node, the traffic in the blockchain network intended for the new node but directed to the target node.

In this method, the public node pool is introduced to the blockchain network. The public node pool may perform data presynchronization with the external node in the blockchain network. The new node may perform ledger synchronization based on a ledger snapshot of a node in the public node pool, without consuming significant bandwidth resources. The ledger synchronization time may also be greatly shortened, for example, from one week to minutes. In addition, during creation of a new node or ledger synchronization, traffic of the blockchain network is switched to a target node that normally runs a service in the public node pool, thereby ensuring uninterrupted service.

In some possible implementations, the controller may further receive node configuration information of the public node pool, where the node configuration information includes at least one of a blockchain type, an image location, a ledger backup policy, or a ledger backup frequency. The controller creates a shared node in the public node pool based on the node configuration information, determines a quantity of non-snapshot ledger nodes among the shared node, and configures a snapshot ledger node and a non-snapshot ledger node in the public node pool based on the quantity. A service running on the snapshot ledger node is interrupted during generation of a ledger snapshot, and the non-snapshot ledger node normally runs a service.

In this way, the public node pool may be pre-created (or referred to as pre-creation), which lays a foundation for subsequently performing ledger synchronization on the new node based on the public node pool and accelerating startup of the new node.

In some possible implementations, the controller instructs the new node to copy a ledger snapshot from a storage snapshot pool corresponding to the public node pool and perform ledger synchronization based on the ledger snapshot, where the storage snapshot pool stores a ledger snapshot generated by the snapshot ledger node in the public node pool. Performing ledger synchronization based on the ledger snapshot may greatly shorten the ledger synchronization time so that the new node can be immediately available.

In some possible implementations, the controller may further receive a ledger synchronization manner the new node configured by a user, where the ledger synchronization manner includes performing ledger synchronization based on a ledger snapshot.

The method supports a user-defined ledger synchronization manner. When the user defines the ledger synchronization manner as ledger synchronization based on a ledger snapshot, the ledger snapshot is used to synchronize the ledger to the new node. When the user defines the ledger synchronization manner as another synchronization manner, for example, a common synchronization manner, ledger synchronization is performed in a point-to-point manner and the like, thereby achieving good compatibility.

In some possible implementations, the blockchain network further includes a user node pool, and the node creation request is used to create the new node in the user node pool.

A node in the public node pool that performs synchronization with the external node may be considered as a seed node. The public node pool presynchronizes data such as a block by using the seed node, to implement data synchronization with the external node and construct the latest ledger in real time. The user node pool is configured to meet node usage requirements and provide a quick use capability for a user. The user node pool and the public node pool can perform quick data synchronization through an internal network, and can provide a second-level creation capability or a second-level startup capability.

In some possible implementations, the node creation request is used to create the new node in the public node pool. Correspondingly, the controller adds traffic (such as a transaction request and a transaction txs) of the blockchain network to the shared transaction pool. The shared transaction pool is configured with a quota for a user using the shared transaction pool, the quota indicates a maximum amount of traffic addable by the user to the shared transaction pool, and traffic in the shared transaction pool is routed to the target node in the public node pool. The shared transaction pool may be considered as a message queue, and traffic of the blockchain network may be scheduled, by using a publisher consumer mechanism, to the target node in the public node pool for processing.

In the method, the shared transaction pool is introduced, and a user in the shared transaction pool is used to configure a quota, so that traffic control can be implemented, and normal service running can be ensured.

In some possible implementations, the target node is a node whose load is less than a threshold or whose load ranks top n in ascending order, and n is a positive integer. The traffic in the shared transaction pool may be scheduled, in a load balancing manner, to the target node whose load is less than the threshold or whose load ranks top n in ascending order, thereby reducing congestion.

In some possible implementations, the controller may further receive a version update request, where the version update request is used to perform a version update on at least one node in the blockchain network. The controller performs a version upgrade on the at least one node based on the version update request, and switching traffic of the at least one node to the target node. When the version update of the at least one node is completed, the router switches, to the at least one node, the traffic in the blockchain network intended for the at least one node but directed to the target node. In this way, a service is not interrupted during the version upgrade, and a service requirement is met.

In some possible implementations, the version update request is used to perform a version update on at least one node in the public node pool of the blockchain network. Correspondingly, the controller may switch the traffic of the at least one node to a non-upgrade node that normally runs a service in the public node pool. For example, the controller may switch the traffic of the at least one node to a non-rolling upgrade node that normally runs a service in the public node pool. In this way, high service availability can be implemented.

In some possible implementations, the checker may further monitor a blockchain height of a ledger maintained by a node in the public node pool, and when a difference between the blockchain height of the ledger maintained by the node in the public node pool and a blockchain height of a ledger maintained by the external node is greater than a first value, reset the ledger in the node and restore the ledger in the node based on the ledger snapshot. In this way, a fault can be detected in a timely manner, and fault recovery can be performed quickly.

According to a second aspect, this application provides a management system for a blockchain network. The blockchain network includes a public node pool and an external node, and the management system includes a controller, a checker, and a router.

The controller is configured to receive a node creation request.

The controller is further configured to create a new node in the blockchain network in response to the node creation request, and switch, to a target node in the public node pool, traffic intended for the new node, where the public node pool is configured to perform data presynchronization with the external node in the blockchain network, and the target node is a node that normally runs a service in the public node pool.

The checker is configured to check a status of the new node or a blockchain height of a ledger maintained by the new node.

The router is configured to: when the status of the new node or the blockchain height of the ledger maintained by the new node meets a condition, switch, to the new node, the traffic in the blockchain network intended for the new node but directed to the target node.

In some possible implementations, the controller is further configured to:
receive node configuration information of the public node pool, where the node configuration information includes at least one of a blockchain type, an image location, a ledger backup policy, or a ledger backup frequency;
create a shared node in the public node pool based on the node configuration information; and
determine a quantity of non-snapshot ledger nodes among the shared node, and configure a snapshot ledger node and a non-snapshot ledger node in the public node pool based on the quantity, where a service running on the snapshot ledger node is interrupted during generation of a ledger snapshot, and the non-snapshot ledger node normally runs a service.

In some possible implementations, the controller is further configured to:
instruct the new node to copy a ledger snapshot from a storage snapshot pool corresponding to the public node pool and perform ledger synchronization based on the ledger snapshot, where the storage snapshot pool stores a ledger snapshot generated by the snapshot ledger node in the public node pool.

In some possible implementations, the controller is further configured to:
receive a ledger synchronization manner of the new node configured by a user, where the ledger synchronization manner includes performing ledger synchronization based on a ledger snapshot.

In some possible implementations, the blockchain network further includes a user node pool, and the node creation request is used to create the new node in the user node pool.

In some possible implementations, the node creation request is used to create the new node in the public node pool, and the controller is further configured to:
add traffic of the blockchain network to a shared transaction pool, where the shared transaction pool is configured with a quota for a user using the shared transaction pool, the quota indicates a maximum amount of traffic addable by the user to the shared transaction pool, and traffic in the shared transaction pool is routed to the target node in the public node pool.

In some possible implementations, the target node is a node whose load is less than a threshold or whose load ranks top n in ascending order, and n is a positive integer.

In some possible implementations, the controller is further configured to:
receive a version update request, where the version update request is used to perform a version update on at least one node in the blockchain network; and
perform a version upgrade on the at least one node based on the version update request, and switch traffic of the at least one node to the target node; and
the router is further configured to:
   when the version update of the at least one node is completed, switch, to the at least one node, the traffic in the blockchain network intended for the at least one node but directed to the target node.

In some possible implementations, the version update request is used to perform a version update on at least one node in the public node pool of the blockchain network.

The controller is specifically configured to:
switch the traffic of the at least one node to a non-upgrade node that normally runs a service in the public node pool.

In some possible implementations, the checker is further configured to:
monitor a blockchain height of a ledger maintained by a node in the public node pool, and when a difference between the blockchain height of the ledger maintained by the node in the public node pool and a blockchain height of a ledger maintained by the external node is greater than a first value, reset the ledger in the node and restore the ledger in the node based on the ledger snapshot.

According to a third aspect, this application provides a compute device cluster. The compute device cluster includes at least one compute device, and the at least one compute device includes at least one processor and at least one memory. The at least one processor and the at least one memory communicate with each other. The at least one processor is configured to execute instructions stored in the at least one memory, to cause the compute device or the compute device cluster to perform the management method for a blockchain network according to any one of the first aspect or the implementations of the first aspect.

According to a fourth aspect, this application provides a computer-readable storage medium. The computer-readable storage medium stores instructions. The instructions instruct a compute device or a compute device cluster to perform the management method for a blockchain network according to any one of the first aspect or the implementations of the first aspect.

According to a fifth aspect, this application provides a computer program product including instructions. When the computer program product runs on a compute device or a compute device cluster, the compute device or the compute device cluster is caused to perform the management method for a blockchain network according to any one of the first aspect or the implementations of the first aspect.

Based on the implementations provided in the foregoing aspects, this application may further combine technologies in this application to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of a node pool in a blockchain network according to this application;
FIG. 2 is a diagram of a user dedicated node pool according to this application;
FIG. 3 is a diagram of a user shared node pool according to this application;
FIG. 4 is a diagram of an architecture of a management system for a blockchain network according to this application;
FIG. 5 is a flowchart of a management method for a blockchain network according to this application;
FIG. 6 is a schematic flowchart of creating a public node pool according to this application;
FIG. 7 is a diagram of an application scenario of a management method for a blockchain network according to this application;
FIG. 8 is a diagram of an application scenario of another management method for a blockchain network according to this application;
FIG. 9 is a diagram of a structure of a compute device according to this application;
FIG. 10 is a diagram of a structure of a compute device cluster according to this application;
FIG. 11 is a diagram of a structure of another compute device cluster according to this application; and
FIG. 12 is a diagram of a structure of still another compute device cluster according to this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

A blockchain network may also be briefly referred to as a blockchain, and is a peer-to-peer (peer-to-peer, P2P) network constructed based on a blockchain technology. The blockchain network includes multiple blockchain nodes, and each blockchain node is a peer node (for ease of description, the blockchain node may also be referred to as a chain node or a node for short in this application). In the blockchain network, the multiple blockchain nodes jointly maintain a continuously growing blockchain ledger (or referred to as a ledger for short) that is constructed by ordered data blocks. The blockchain nodes each store a copy of the blockchain ledger, and maintain consistency between copies. Therefore, the blockchain ledger is a public ledger of the blockchain network. The public ledger is a distributed ledger. Therefore, the blockchain network may be essentially considered as a distributed ledger system.

The distributed ledger system is a special type of distributed database system that performs only additional operations, and is applicable to untrusted environments. Specifically, in the distributed ledger system, new data may be attached to a local copy of each node in a transaction manner, and it is ensured, by using a specific encryption mechanism, that data in the ledger cannot be randomly deleted or changed. It should be noted that the distributed ledger system allows a Byzantine failure, including but not limited to a Byzantine failure caused by a node crash, an access failure, a network delay, or a malicious behavior of a node. The Byzantine failure is also referred to as a byzantine problem, and refers to a problem of how to reach a consensus in a scenario in which a few nodes may perform a malicious behavior (a message may be forged). To ensure data consistency between nodes in the distributed ledger system, each distributed ledger system uses a consensus mechanism.

The consensus mechanism is an algorithm for negotiating a validity status of a current ledger between different nodes in the distributed ledger system. An objective of the consensus mechanism may be to implement final consistency of ledgers between different nodes in a distributed system through consensus. If all nodes can successfully be written into a ledger and store a same ledger copy, it indicates that the distributed ledger system achieves final consistency.

Cloud computing (Cloud Computing) is a computing mode that provides dynamic, scaling, and virtual resources by using services through a network. Platform as a service (Platform as a Service, PaaS) is one of main modes of cloud computing multi-tenant. On a PaaS platform, different tenants may be registered to use PaaS platform resources and services. For example, the PaaS platform may provide a blockchain-as-a-service (Blockchain-As-A-Service, BaaS), and the blockchain as a service may be used as a public cloud service to provide a public cloud tenant with a capability of creating or deploying a blockchain node.

Serverless computing (serverless computing, serverless for short) is an execution model of cloud computing. In a serverless architecture, a cloud provider or a cloud vendor allocates machine resources on demand and manage servers on behalf of customers. Developers of serverless applications do not care about capacity planning, configuration, management, maintenance, fault tolerance, or expansion of containers, virtual machines, or physical servers. Serverless computing does not store resources in a volatile memory. Computing is done in a short time, and results are stored in a storage. When an application is not in use, no computing resource is allocated to the application. Therefore, application O&M costs can be effectively reduced.

The serverless blockchain-as-a-service has become a mainstream solution for cloud blockchain hosting applications. The cloud-native blockchain node may provide resources for a customer on demand, and may also save significant internal resources. Therefore, the cloud-native blockchain node is widely used. In fields that are highly concerned about resource consumption and costs, such as the web3 field, a service of building a blockchain node through a serverless capability has a great advantage in building a low-cost blockchain node.

Currently, to add a new node to the blockchain network, a user usually purchases an ECS virtual machine on a cloud platform, and then directly deploys a blockchain node on the ECS virtual machine. However, the new node needs to occupy a large amount of bandwidth to perform ledger synchronization with an original node in the blockchain network. Description is made below by using a blockchain network of Ethereum as an example. About 7,000 to 10,000 nodes in the blockchain network are distributed in cities around the world. A new node pulls a ledger from the foregoing nodes to perform ledger synchronization. In a public chain such as Ethereum, an average data volume of a full node is about 1 TB, and data volumes of some full nodes may even reach several TB. A new node needs to occupy significant bandwidth resources for ledger synchronization, which may affect running of an on-chain transaction. Each time a new node is started, the foregoing synchronization process needs to be performed, causing repeated consumption of bandwidth resources. In addition, according to a gossip point-to-point synchronization mode, it usually takes one week to complete data synchronization on a new node before the new node is available, which cannot meet a service requirement.

In view of this, this application provides a management method for a blockchain network. The method may be performed by a management system for a blockchain network. For ease of description, the management system for a blockchain network may also be referred to as a management system for short in this application. The management system may be a software system. The software system is used to meet a tenant service requirement by using a node pool in a multi-tenant scenario of a cloud platform, and support a blockchain feature such as a blockchain node change. The blockchain feature includes but is not limited to quick creation of a new node (for example, second-level creation of a blockchain node), a blockchain node update (for example, version update of a blockchain node), and blockchain node fault recovery. According to the solution of this application, consumption of bandwidth resources can be reduced, so that a service provider can use a small quantity of resources to construct a service capability. In addition, second-level creation of a blockchain node eliminates a ledger synchronization time, and the blockchain node can be immediately available. The software system may be deployed in a compute device cluster, and the compute device cluster executes program code of the software system, to perform the management method for a blockchain network in this application. In some examples, the management system may alternatively be a hardware system, for example, a compute device cluster that supports the foregoing blockchain feature. When the compute device cluster runs, the management method for a blockchain network in this application is performed.

The blockchain network includes a public node pool and an external node, and the management system may include a controller (controller), a checker (checker), and a router

(router). Specifically, the controller may receive a node creation request, and the controller creates a new node in the blockchain network in response to the node creation request, and switches, to a target node in the public node pool, traffic intended for the new node. The public node pool is configured to perform data presynchronization with the external node. The external node is a blockchain node in an external network, for example, a node managed by another organization in the blockchain network. A node in the public node pool usually needs to interact with the external node by using an EIP. The target node is a node that normally runs a service in the public node pool. The checker may check a status of the new node or a blockchain height (referred to as a block height for short) of a ledger maintained by the new node. When the status of the new node or the block height of the ledger maintained by the new node meets a condition, the router switches, to the new node, the traffic in the blockchain network intended for the new node but directed to the target node.

In this method, the public node pool is introduced to the blockchain network. The public node pool may perform data presynchronization with the external node in the blockchain network. The new node may perform ledger synchronization based on a ledger snapshot of a node in the public node pool, without consuming significant bandwidth resources. The ledger synchronization time may also be greatly shortened, for example, from one week to minutes. In addition, during creation of a new node or ledger synchronization, traffic of the blockchain network is switched to a target node that normally runs a service in the public node pool, thereby ensuring uninterrupted service.

Further, a user node pool is further introduced in this application. A node pool (for example, the public node pool or the user node pool) is a public resource area constructed by a blockchain node, and may include multiple blockchain nodes. A node in the public node pool that performs synchronization with the external node may be considered as a seed node. The public node pool presynchronizes data such as a block by using the seed node, to implement data synchronization with the external node and construct the latest ledger in real time. The user node pool is configured to meet node usage requirements and provide a quick use capability for a user. For example, the user node pool and the public node pool can perform quick data synchronization through an internal network, and can provide a second-level creation capability or a second-level startup capability.

According to the management method for a blockchain network provided in this application, it is ensured, based on a node pool, that different blockchain networks can adapt to a serverless architecture. By using a capability of the serverless architecture, capabilities such as fast synchronization of a blockchain ledger, fast recovery of a node fault, and non-interruption of a service during a version upgrade can be implemented. In addition, based on the node pool, consumption of bandwidth resources by new nodes (nodes newly added to the blockchain network) can be reduced, and a second-level startup capability of nodes can be provided. In addition, automatic node fault recovery can be performed by using an internal detection apparatus such as a checker.

For ease of understanding the technical solutions of this application, the following first describes a node pool introduced in this application with reference to the accompanying drawings.

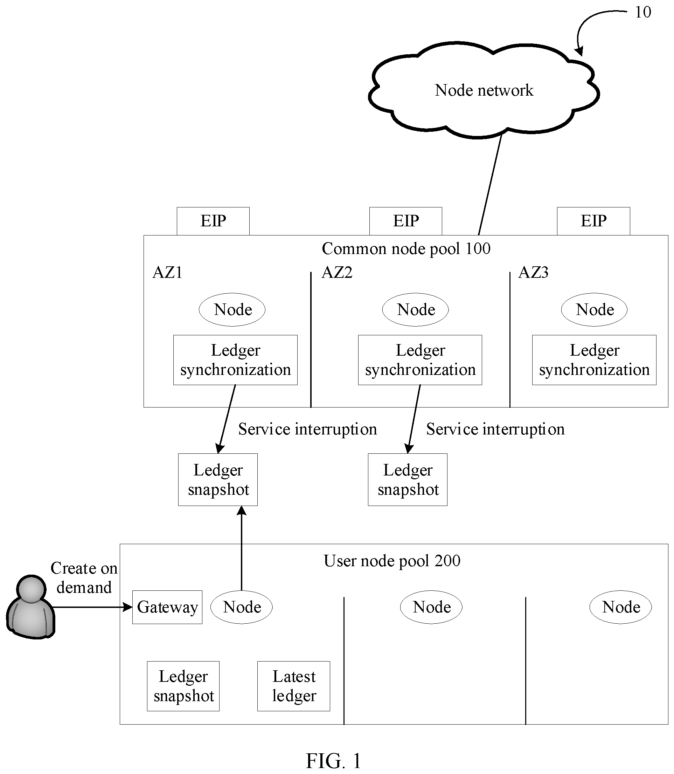

FIG. 1 is a diagram of a node pool in a blockchain network. A blockchain network 10 includes a public node pool 100. The public node pool 100 includes multiple nodes (node). A node in the public node pool 100 may be a shared node. Nodes in the public node pool 100 may be distributed at different locations, for example, distributed in different availability zones (Availability Zone, AZ). FIG. 1 is described by using an example in which a public node pool 100 includes three nodes, and the three nodes are respectively distributed in an AZ 1, an AZ 2, and an AZ 3. An EIP is further configured for a node in the public node pool 100. The node in the public node pool 100 may interact with a node network in the blockchain network 10 by using the EIP, to perform ledger synchronization with an external node in the node network, to construct the latest ledger. The node network may be a network formed by a node managed by another organization in the blockchain network 10.

The node in the public node pool 100 may further back up a ledger. Specifically, the node may generate a ledger snapshot by using a snapshot (snapshot) function, to implement ledger backup. A ledger snapshot is a fully available copy of a ledger. The copy includes a status of the ledger at a specific time point (for example, a time point when the copy starts). A node that backs up a ledger by using a snapshot in the public node pool 100 is also referred to as a snapshot ledger node, and the snapshot ledger node may generate a ledger snapshot based on a configured backup frequency. For example, the ledger snapshot node may generate a ledger snapshot every 10 minutes. When the snapshot ledger node backs up the ledger, a service on the snapshot ledger node may be interrupted, in other words, a service running on the snapshot ledger node may be interrupted during generation of the ledger snapshot, a non-snapshot ledger node may be further disposed in the public node pool 100, to ensure that a service is not interrupted. The non-snapshot ledger node may support normal service running. In an example in FIG. 1, the public node pool 100 includes two snapshot ledger nodes and one non-snapshot ledger node.

Further, the blockchain network 10 may further include a user node pool 200. The user may trigger an operation of creating a blockchain node in the user node pool 200. The user may create a blockchain node on demand, and the blockchain node created by the user is a new node. During creation of a new node, for example, during creation of a new node in the user node pool 200, the user may configure a ledger synchronization manner for the new node. The ledger synchronization manner includes performing ledger synchronization based on a ledger snapshot. When the user configures the ledger synchronization manner as performing ledger synchronization based on the ledger snapshot, the node creation request may further include an identifier or a flag bit for performing ledger synchronization based on the ledger snapshot. In this way, after the new node is created, a ledger snapshot generated by performing backup by a node in the public node pool may be obtained, and ledger synchronization is performed based on the ledger snapshot, to obtain the latest ledger. The new node may obtain a ledger snapshot (a latest ledger snapshot) with a maximum ledger block height to perform ledger synchronization, to further improve synchronization efficiency. Compared with a conventional solution, a ledger synchronization time in this application may be reduced to a minute level, so that a service requirement can be met.

It should be noted that this application may provide a capability of constructing a dedicated node on the cloud or a capability of constructing a shared node. The following is separately described with reference to the accompanying drawings.

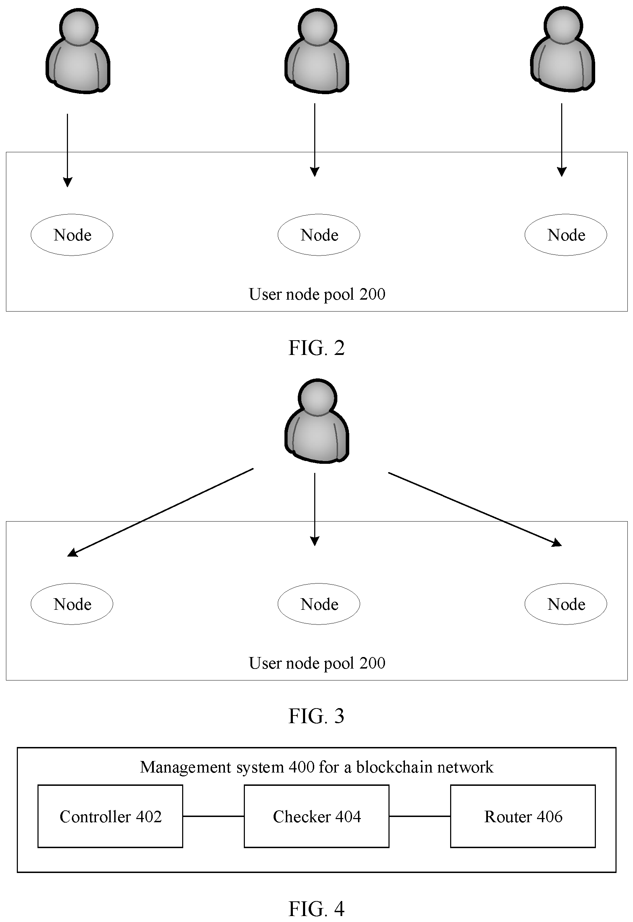

As shown in FIG. 2, a blockchain node constructed in the user node pool 200 may be a user dedicated node. The user node pool 200 may include a user dedicated node pool. Each node in the user dedicated node pool is dedicated to one user. For example, the user dedicated node pool may include three user dedicated nodes, and the three user dedicated nodes belong to different users.

As shown in FIG. 3, a blockchain node constructed in the user node pool 200 may be a user shared node. The user node pool 200 may include a user shared node pool, or may be referred to as a shared node pool for short. Each node in the user shared node pool may be shared by multiple users. In a non-dedicated mode, resources in the user shared node pool may be shared by all users, which improves resource utilization (reusability).

The following describes, with reference to the accompanying drawings, a system architecture of a management system for a blockchain network provided in this application.

FIG. 4 is a diagram of an architecture of a management system. A management system 400 includes a controller 402, a checker 404, and a router 406. The following separately describes functions of the controller 402, the checker 404, and the router 406.

The controller 402 is configured to receive a node creation request. The controller 402 is further configured to: in response to the node creation request, create a new node in the blockchain network, and switch, to a target node in the public node pool, traffic intended for the new node (for example, traffic scheduled to the new node through load balancing). The public node pool is configured to perform data presynchronization with an external node, and the target node is a node that normally runs a service in the public node pool. For example, the public node pool may include a snapshot ledger node and a non-snapshot ledger node. A service running on the snapshot ledger node is interrupted during generation of a ledger snapshot, and the non-snapshot ledger node normally runs a service. Based on this, the target node may be a non-snapshot ledger node. In some examples, the snapshot ledger node may include a first node in a period of generating a ledger snapshot or a second node not in a period of generating a ledger snapshot, and the target node may alternatively be the second node. The second node that is in the non-snapshot ledger node or the snapshot ledger node but not in a period of generating a ledger snapshot may be collectively referred to as an available node in the public node pool, and the available node may form an available public node pool.

The checker 404 is configured to check a status of the new node or a blockchain height of a ledger maintained by the new node. A blockchain height (Height), referred to as a block height for short, is a maximum quantity of blocks (Block) produced on a current blockchain. The block height may be represented by using a quantity or numbers of blocks on the blockchain. A number of a block is a quantity of blocks between the block and a genesis block. The genesis block is a first block generated on the blockchain, and a number of the genesis block may be usually 0.

When the status of the new node or the blockchain height of the ledger maintained by the new node meets a condition, the router 406 is configured to switch, to the new node, the traffic in the blockchain network intended for directed from the new node but directed to the target node. That the status of the new node meets the condition may be that creation of the new node is completed. That the blockchain height of the ledger maintained by the new node meets the condition may be that a difference between the block height of the ledger maintained by the new node and a block height of the ledger maintained by the external node is less than a first value. The difference may be represented by using a difference between the block height of the ledger maintained by the external node and the block height of the ledger maintained by the new node, or may be represented by using an absolute value of the difference. The first value may be determined based on a block production rate.

Based on the management system 400 shown in FIG. 4, this application further provides a management method for a blockchain network. The following describes the management method for a blockchain network in this application with reference to the accompanying drawings.

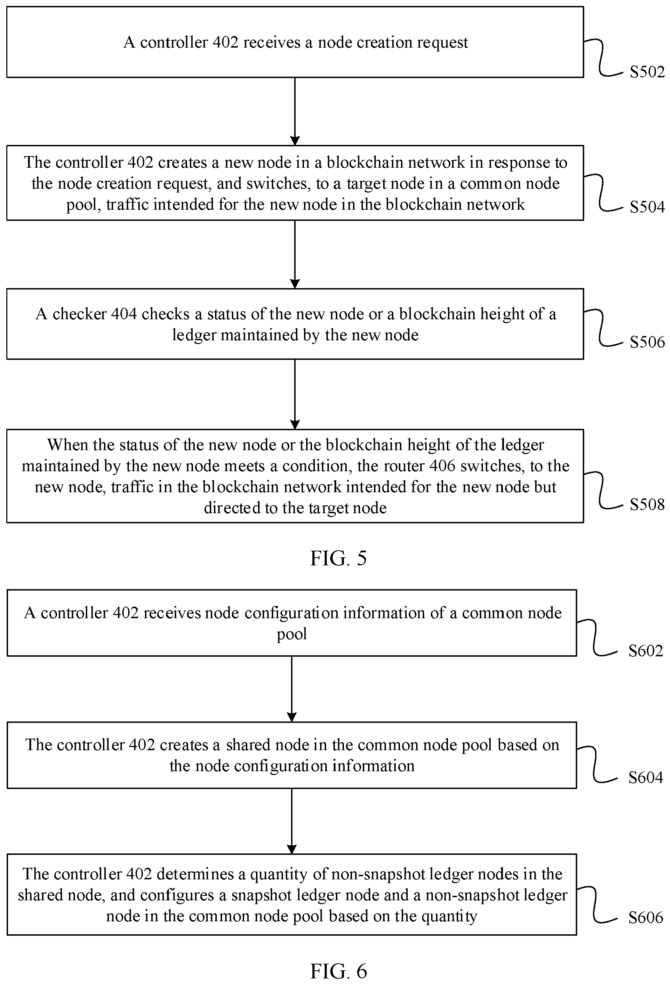

FIG. 5 is a flowchart of a management method for a blockchain network. The blockchain network includes a public node pool and an external node. The external node may be a node managed by another organization. A node in the public node pool supports interaction with an external network, for example, may interact with the external node by using an EIP. The method is performed by the management system 400, and the management system 400 includes the controller 402, the checker 404, and the router 406. The method includes the following steps.

S502: The controller 402 receives a node creation request.

The node creation request may also be referred to as a node provisioning request in some cases. The node creation request is used to create a new node, and the new node is a blockchain node. A blockchain node is responsible for storing a data block, and is a storage unit in a blockchain network, and may keep data synchronized and in the latest state. A unit-based architecture may be built inside a blockchain node. The unit-based architecture includes a consensus client (consensus client) and an execution client (execution client). The consensus client and the execution client may communicate with each other through remote procedure call (Remote Procedure Call, RPC). The consensus client is responsible for broadcasting a block, and the execution client is responsible for broadcasting a transaction. For example, the consensus client may receive a block from another node according to a block gossip protocol (block gossip protocol), check whether a format of the block is valid, and then send the block to the execution client. The execution client places all transactions in the block in an Ethereum virtual machine (EVM) for execution, and updates Merkle Patricia Trie (Merkle Patricia Trie, MPT) data. MPT is a data structure for recording a transaction at an abstraction layer. The execution client then checks whether a hash value of a block header is correct. The execution client transmits verification data to the consensus client, to indicate that the block is valid. The consensus client appends the block to the header of a local blockchain, and broadcasts the block in a consensus layer network.

In specific implementation, the node creation request may also be used to create a new node in the public node pool 100. In some examples, the blockchain network may further include a user node pool. The node creation request may be used to create a new node in the user node pool 200. The new node may be a user dedicated node or a user shared node.

The controller 402 may provide a configuration interface, and a user may configure node information of a to-be-created new node on the configuration interface. The node information may include a node pool to which a node belongs. Further, the node information may further include a node type. The node pool to which the node belongs includes the user node pool 200 or the public node pool 100. When the node belongs to the user node pool 200, the node information may further include a node type, and the node type may be a user dedicated node or a user shared node.

In some possible implementations, the controller 402 may further receive a version update request. In some cases, the version update request is also referred to as a version upgrade request or a node upgrade request. The version update request is used to perform a version upgrade (for example, background version upgrade), to update a chain node (at least one node in the blockchain network). To prevent service interruption, a rolling upgrade (Rolling update) manner may be used to perform a version update or upgrade of a chain node. Rolling upgrade is to update a batch of blockchain nodes each time, instead of updating all blockchain nodes at the same time. When update of a batch of blockchain nodes is completed, a next batch of blockchain nodes are updated.

Similarly, the controller 402 may provide a configuration interface, and a user may configure, on the configuration interface, node information of a node on which a version update is to be performed. The node information may include a node identifier indicating a node on which a version update is to be performed. The user may further configure a path or an address of a code file of a new version on the configuration interface, so that a node on which a version update is to be performed may perform a version update based on the path or the address of the code file of the new version.

S504: The controller 402 creates a new node in the blockchain network in response to the node creation request, and switches, to a target node in the public node pool, traffic intended for the new node in the blockchain network.

The public node pool 100 is configured to perform data presynchronization with the external node. Specifically, an EIP is configured for a node in the public node pool 100. The node in the public node pool 100 may interact with an external node in a node network by using the EIP, to perform ledger presynchronization, to construct the latest ledger in real time.

The target node is a node that normally runs a service in the public node pool 100. The following separately provides descriptions.

In some possible implementations, the node creation request is used to create the new node in the public node pool 100. Specifically, the node creation request indicates that a node pool to which the new node belongs is the public node pool 100. The controller 402 may create the new node in the public node pool 100 in response to the node creation request. To avoid service interruption, the controller 402 further switches, to the target node in the public node pool 100, traffic intended for the new node in the blockchain network. The target node may be, for example, a low-load node in an available public node pool. The available public node pool includes an available node in the public node pool, and the available node is a node that normally runs a service. The low-load node may be a node whose load is less than a load threshold or whose load ranks top n in ascending order. Herein, n is a positive integer.

In other possible implementations, the blockchain network includes a user node pool 200, and the node creation request may be used to create the new node in the user node pool 200. The node creation request indicates that a node pool to which the new node belongs is the user node pool 200. The controller 402 may create the new node in the user node pool 200 in response to the node creation request. To avoid service interruption, the controller 402 further switches, to the target node in the public node pool 100, traffic intended for the new node in the blockchain network. The target node may be, for example, a node in an available public node pool, namely, an available node in the public node pool 100. The target node normally runs a service. The target node may be a non-snapshot ledger node in the public node pool. Alternatively, the target node may be a snapshot ledger node that is not in a period of generating a ledger snapshot in the public node pool, for example, a second node.

Further, when the node creation request instructs to create a new node in the user node pool 200, the controller 402 may create a new node of a corresponding type in the user node pool 200 based on a node type indicated by the node creation request. For example, if the node type indicated by the node creation request is a user dedicated node, the controller 402 may create the user dedicated node in the user node pool 200. For another example, if the node type indicated by the node creation request is a user shared node, the controller 402 may create the user shared node in the public node pool 100.

It should be noted that when the node creation request is used to create a new node in the public node pool 100, the controller 402 may further add traffic of the blockchain network to a shared transaction pool. The shared transaction pool is configured with a quota for a user using the shared transaction pool, the quota indicates a maximum amount of traffic addable by the user to the shared transaction pool, and traffic in the shared transaction pool may be routed to the target node in the public node pool 100. This prevents data synchronization from occupying too many bandwidth resources and ensures normal running of an application service.

The snapshot ledger node in the public node pool 100 may further generate a ledger snapshot, and the ledger snapshot may be stored in a storage snapshot pool. In a node creation scenario, the controller 402 may further instruct the new node to copy a ledger snapshot from a storage snapshot pool corresponding to the public node pool 100 and perform ledger synchronization based on the ledger snapshot. The controller 402 may further receive a ledger synchronization manner the new node configured by the user. The ledger synchronization manner may include performing ledger synchronization based on a ledger snapshot. When the user configures the ledger synchronization manner as performing ledger synchronization based on the ledger snapshot, the node creation request may further include an identifier or a flag bit for performing ledger synchronization based on the ledger snapshot. Correspondingly, when the controller 402 starts a new node, for example, a user dedicated node, the node may perform ledger synchronization by using a target ledger snapshot. In this way, the ledger synchronization time may be greatly shortened, and consumption of bandwidth resources may be reduced.

Further, when the controller 402 receives the version update request, the controller 402 may perform a version upgrade on the at least one node (chain node) based on the version update request, and switch traffic of the at least one node to the target node. When the version update of the at least one node is completed, the router 406 switches, to the at least one node, the traffic in the blockchain network intended for the at least one node but directed to the target node. The target node may be a non-upgrade node in the public node pool 100. The non-upgrade node may be a non-rolling upgrade node.

The controller 402 may update a batch of blockchain nodes in the blockchain network in a rolling upgrade manner. The controller 402 may update, based on a node identifier in the version update request, a batch of blockchain nodes in the blockchain network that correspond to the node identifier. In addition, the controller 402 may switch, to the target node in the public node pool 100, traffic of at least one node on which a version update is performed in the blockchain network. When the blockchain network includes the user node pool 200, a node on which a version update is performed is a node in the user node pool 200, and the target node may be an available node that meets a load requirement in the public node pool 100, for example, the foregoing low-load node that normally runs a service. When the blockchain network does not include the user node pool 200, the target node may be a non-upgrade node, for example, a non-rolling upgrade node.

S506: The checker 404 checks a status of the new node or a blockchain height of a ledger maintained by the new node.

Specifically, the new node may send a heartbeat message when creation is completed, and the checker 404 may check the status of the new node by checking the heartbeat message. For example, if the checker 404 receives the heartbeat message of the new node, it indicates that the creation of the new node is completed. If the checker 404 does not receive the heartbeat message of the new node, it indicates that the creation of the new node is not completed. For example, if the checker 404 does not receive the heartbeat message of the new node within a set time, it indicates that the creation of the new node is not completed.

A blockchain height, referred to as a block height for short, is specifically a maximum quantity of blocks produced on a current blockchain. The block height may be represented by using a quantity or numbers of blocks on the blockchain. The checker 404 may read a number of the latest block of the ledger maintained by the new node, to obtain the block height of the ledger maintained by the new node.

S508: When the status of the new node or the blockchain height of the ledger maintained by the new node meets a condition, the router 406 switches, to the new node, the traffic in the blockchain network intended for the new node but directed to the target node.

That changing the status of the node meets a condition may be that the change is completed, for example, creation of the new node is completed. That the blockchain height of the ledger maintained by the new node meets the condition may be that the difference between the blockchain height of the ledger maintained by the new node and the blockchain height of the ledger maintained by the external node (which is referred to as a block height difference between the new node and the external node for short) is less than the first value. If the status of the new node is creation completed, or the block height difference between the new node and the external node is less than the first value, it indicates that the new node is available. The router 406 may switch, back to the new node, the traffic in the blockchain network intended for the new node but directed to the target node. In some examples, when both the status of the new node and the blockchain height of the ledger maintained by the new node meet the condition, the router 406 may alternatively switch, back to the new node, the traffic in the blockchain network intended for the new node but directed to the target node.

The first value may be determined based on a block production rate. For example, the first value may be determined by using the following formula: $s = 60 ∗ m / a$ (1)

Herein, a represents a block production rate, and is specifically a quantity of blocks produced per second, and m is a quantity of minutes. For example, a value of m may be 2, and s represents the first value.

Further, for the at least one node on which a version upgrade is performed in the blockchain network, when the version update of the at least one node is completed, the router 406 may switch, to the at least one node, the traffic in the blockchain network intended for the at least one node but directed to the target node. Specifically, the router 406 may invoke the checker 404 to check the status of the at least one node or the blockchain height of the ledger maintained by the at least one node. When the status of the at least one node is update completed, or a difference between a blockchain height of a ledger maintained by the at least one node and the blockchain height of the ledger maintained by the external node (that is, a block height difference between the at least one node and the external node) is less than the first value, it indicates that the at least one node is available, and the router 406 may switch, back to at least one node on which update is completed (upgrade is completed), the traffic in the blockchain network intended for the new node but directed to the target node.

In some possible implementations, the checker 404 may further monitor a blockchain height of a ledger maintained by a node in the public node pool 100. When the new node is a node created in the public node pool 100, the blockchain height of the ledger maintained by the node in the public node pool 100 may include the blockchain height of the ledger maintained by the new node. When the difference between the blockchain height of the ledger maintained by the node in the public node pool 100 and the blockchain height of the ledger maintained by the external node is greater than the first value, it indicates that the ledger of the node is abnormal. The checker 404 may reset the ledger in the node, and restore the ledger in the node based on the ledger snapshot.

Based on the foregoing description of content, in this method, the public node pool may be introduced to the blockchain network. The public node pool performs data presynchronization with the external node in the blockchain network. The new node may perform ledger synchronization based on a ledger snapshot of a node in the public node pool, without consuming significant bandwidth resources. The ledger synchronization time may also be greatly shortened, for example, from one week to minutes. In addition, during creation of the new node, traffic (for example, traffic scheduled to the new node through load balancing) intended for the new node in the blockchain network is switched to a target node that normally runs a service in the public node pool, thereby ensuring uninterrupted service and normally running.

It should be noted that the public node pool 100 in this application is different from a node-based resource pool in a related technology. The node-based resource pool in the related technology cannot be directly used, and is usually used after ledger synchronization is completed. In addition, all blockchain nodes in the related technology are open-source nodes, and some unpredictable problems, for example, a soft fork problem, may occur in different versions. A soft fork means a temporary fork generated because a node that is not upgraded generates an invalid block because the node does not know a new consensus rule after the new consensus rule is released. Therefore, it is required to check a block height difference between a current data block and an external data block and recover from a fault in time when the block height difference is abnormal. In addition, after a transaction is initiated, a fee is generated for each transaction, and consumption is generated by a user. If data in a memory is not successfully sent, a ledger in a node is abnormal (the node is faulty). In this case, the data in the memory needs to be restored and reconstructed. Otherwise, a transaction is lost.

In the solution of this application, a user (for example, an administrator) may first complete creation of a preset public node pool, and complete ledger synchronization, to ensure that a ledger is available, to implement subsequent node creation, node update, or fault recovery.

FIG. 6 is a schematic flowchart of creating a public node pool, and the following steps are included.

S602: A controller 402 receives node configuration information of a public node pool.

The node configuration information includes at least one of a blockchain type, an image location, a ledger backup policy, or a ledger backup frequency. The blockchain type may include various types of blockchains in an unlicensed blockchain, including but not limited to Ethereum. The image location may include a location of an image file used to create a node or start a node.

The ledger backup policy is a policy for backing up a ledger maintained by a node in the public node pool, for example, a policy for generating a snapshot for a ledger. In some examples, the ledger backup policy may be determined based on a high availability requirement. To achieve high availability, the following formula usually needs to be met: $count = 2 F + 1 , F = 1 , 2 , 3 …$ (2)

Herein, F is a quantity of nodes that perform transactions in the public node pool, for example, a quantity of non-snapshot ledger nodes, and count is a total quantity of nodes in the public node pool. An example in which the public node pool includes three nodes is used for description. In this case, the ledger backup policy may be that two nodes are snapshot ledger nodes, a snapshot is performed on the ledger to implement backup, and one node is a non-snapshot ledger node, and is used to perform backup when the snapshot ledger node interrupts a service to perform a transaction, to ensure normal running of the service.

The ledger backup frequency may be a frequency at which a ledger snapshot is generated. The frequency may be set according to experience. In some examples, the ledger backup frequency may be 10 minutes (minute, min).

In some possible implementations, the node configuration information may further include a content configuration of a configuration file, for example, a quantity of external connections and a frequency at which a block is started.

S604: The controller 402 creates a shared node in the public node pool based on the node configuration information.

The controller 402 may invoke a blockchain-as-a-service, for example, a BaaS, based on the node configuration information to create the shared node in the public node pool. Specifically, the controller 402 may generate a blockchain node of a corresponding blockchain type based on a blockchain type and an image location in the node configuration information by using the BaaS. The blockchain node is a shared node. An image file obtained at a corresponding image location is deployed in the blockchain node.

S606: The controller 402 determines a quantity of non-snapshot ledger nodes among the shared node, and configures a snapshot ledger node and a non-snapshot ledger node in the public node pool based on the quantity.

Considering that a service usually needs to be interrupted when a blockchain node generates a ledger snapshot, for example, memory transaction writing is interrupted, and receiving or synchronizing the latest transaction is started after the ledger snapshot is generated, the controller 402 may configure a non-snapshot ledger node, to ensure that a service can still normally run when some blockchain nodes generate ledger snapshots for ledger backup. In addition, the controller 402 is further configured with a snapshot ledger node, and configured to generate a ledger snapshot for ledger backup. The new node can perform ledger synchronization based on the ledger snapshot, thereby shortening the synchronization time. In addition, when a fault occurs, fast fault recovery may be performed based on the ledger snapshot.

The controller 402 may determine a quantity of non-snapshot ledger nodes among the shared node based on the ledger backup policy in the node configuration information. For example, the quantity of non-snapshot ledger nodes may be 1, and a quantity of snapshot ledger nodes may be 2. The controller 402 may configure, based on the foregoing quantities, a corresponding quantity of nodes in the public node pool as non-snapshot ledger nodes.

Further, the controller 402 may further configure a ledger backup frequency of the snapshot ledger node based on the ledger backup frequency in the node configuration information.

It should be noted that related content of the embodiment in FIG. 6 may be further combined with the foregoing embodiment. This is not limited in this application.

The following describes a management method for a blockchain network in this application with reference to a specific application scenario.

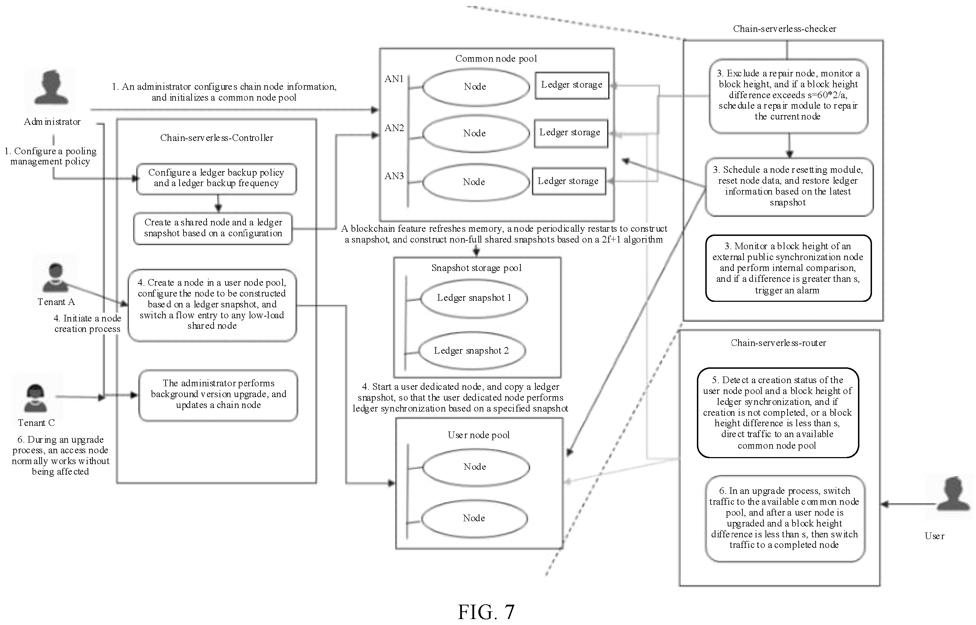

FIG. 7 is a diagram of an application scenario of a management method for a blockchain network. In this scenario, an administrator needs to complete creation of a preset public node pool, complete ledger synchronization, and start construction of a user node pool after ensuring that a ledger is available. The management method for a blockchain network may be collaboratively performed by a controller, a checker, and a router in a management system for a blockchain network. In this embodiment, the controller may be a Chain-serverless-controller component, the checker may be a Chain-serverless-checker component, and the router may be a Chain-serverless-router component. This embodiment is described by using an example in which a tenant A creates a node and a tenant C upgrades a node, and the following steps are specifically included.
1. The administrator enters the node configuration information and a pooling management policy.
   The node configuration information, also referred to as chain node information, may specifically include a blockchain type, an image location, and a content configuration of a configuration file. The administrator may initialize the public node pool by configuring the chain node information. The administrator may further configure a pooling management policy of the public node pool, which may specifically include a ledger backup policy and a ledger backup frequency.
2. The Chain-serverless-controller creates a shared node in the public node pool based on the node configuration information, determines a quantity of non-snapshot ledger nodes based on the ledger backup policy, and configures non-snapshot ledger nodes based on the quantity. The Chain-serverless-controller configures a ledger backup frequency of a snapshot ledger node.
   The snapshot ledger node may periodically generate a ledger snapshot corresponding to each node in the storage snapshot pool based on the configured ledger backup frequency. The snapshot ledger node may further record a block height in a ledger snapshot.
3. The Chain-serverless-checker runs synchronously and checks each node in the public node pool in real time, excludes a repair node, expands a node in synchronization, and monitors a block height of a completed node. If a block height difference exceeds s, the Chain-serverless-checker schedules a repair module to repair the node.
   Excluding the repair node means excluding the repair node (a node being repaired) from a routing table, and performing routing without using the repair node. Expanding the node in synchronization may be expanding a capacity of the node in synchronization. The completed node may be a created node or an updated node. The Chain-serverless-checker may schedule, when a block height difference between a completed node and an external node is greater than s, the repair module to repair the node.

The Chain-serverless-checker is mainly used to ensure that statuses of nodes in the public node pool and the user node pool are normal and automatically recover faulty nodes. Main check and recovery actions of the Chain-serverless-checker may include:
(a) excluding the repair node, monitoring a block height of a completed node, and if a block height difference exceeds s, scheduling the repair module to repair the current node;
(b) scheduling a node resetting module to reset a ledger maintained by a node, and restoring, based on a ledger snapshot, the ledger maintained by the node, where for example, the Chain-serverless-checker may restore a ledger of the node based on the latest ledger snapshot; and
(c) monitoring a block height of an external node (for example, an external public synchronization node) and a block height of an internal node in the public node pool, and if a difference is greater than or equal to s, triggering an alarm.

Specifically, the repair node may reset the ledger maintained by the node, and then restore the ledger of the node based on the ledger snapshot. For example, the ledger of the node may be restored based on the latest ledger snapshot.

4. A tenant A triggers node creation. The Chain-serverless-controller starts to create a node in the user node pool and switches, to the public node pool, traffic intended for the new node in the blockchain network.

Switching the traffic to the public node pool may implement that a node in the public node pool is used to provide a service. In addition, the user node pool may quickly start a node and perform data synchronization based on a ledger snapshot of a highest block.

5. The Chain-serverless-router may schedule the chain-serverless-checker to check a status and a block height of a node in the user node pool. When the status and the block height of the node in the user node pool meet the condition, the chain-serverless-router switches the traffic back to the user node pool to implement serverless startup of a node.

6. A tenant C triggers a version update operation. During the upgrade, the traffic is switched to the node in the public node pool. Then, the Chain-serverless-router schedules the chain-serverless-checker to check the status and block height of the node to be upgraded. When the conditions are met, the Chain-serverless-router switches the traffic back to the user node pool, to complete background silent upgrade.

The Chain-serverless-router component functions as an entry for a user to access a node, and closely interacts with the Chain-serverless-checker component to obtain different node statuses. In a series of switchover scenarios such as node creation, upgrade, and fault, the Chain-serverless-router component is connected to available nodes in different node pools to ensure that a service of a customer is not interrupted.

Specifically, in a node creation scenario, the Chain-serverless-router invokes the Chain-serverless-checker to detect a creation status of the user node pool and a block height of a ledger. If creation is not completed, or a block height difference is greater than s, traffic is directed to an available public node pool. In an upgrade process, the traffic is switched to the available public node pool. After a user node is upgraded and a block height difference is less than s, the traffic is switched back to the user node pool.

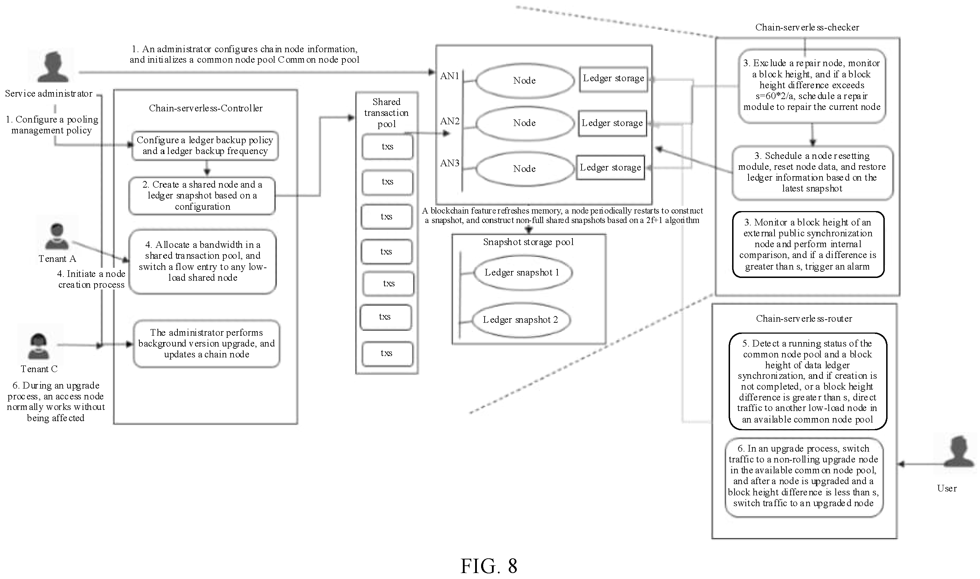

FIG. 8 is a diagram of an application scenario of another management method for a blockchain network. In this scenario, an administrator needs to initialize a public node pool and configure a pooling management policy, for example, configure a ledger backup policy and a ledger backup frequency. After the creation of the preset public node pool is completed and ledger synchronization is completed, node creation and a version update may be triggered. This embodiment is still described by using the example in which the tenant A creates a node and the tenant C upgrades a node.

As shown in FIG. 8, the tenant A initiates a node provisioning process, for example, triggers a node provisioning operation. The Chain-serverless-controller receives a node creation request. The tenant C initiates a version upgrade process. The Chain-serverless-controller receives a version upgrade request. In the embodiment shown in FIG. 8, a shared transaction pool is further introduced to implement serverlessization in a shared node mode. Specifically, the Chain-serverless-checker adds the node creation request, the version upgrade request, and the like to the shared transaction pool. The shared transaction pool is configured with a quota for a user (for example, a tenant) that uses the shared transaction pool, and the quota may indicate a maximum amount of traffic addable by the user to the shared transaction pool. The traffic in the shared transaction pool may be routed to a target node in the public node pool. The Chain-serverless-checker and the Chain-serverless-router perform detection and switchover on each node in the public node pool, to implement traffic switchover. Further, for a full load case, if a load is greater than a threshold, this embodiment of this application further supports dynamic capacity expansion of the public node pool.

Based on the foregoing management method for a blockchain network, this application provides a management system for a blockchain network. With reference to the accompanying drawings, the following describes a management system for a blockchain network in this embodiment of this application from a perspective of function modularization.

FIG. 4 is a diagram of a structure of a management system for a blockchain network, the blockchain network includes a public node pool and an external node, and the management system 400 includes a controller 402, a checker 404, and a router 406.

The controller 402 is configured to receive a node creation request.

The controller 402 is further configured to create a new node in the blockchain network in response to the node creation request, and switch, to a target node in the public node pool, traffic intended for the new node, where the public node pool is configured to perform data presynchronization with the external node in the blockchain network, and the target node is a node that normally runs a service in the public node pool.

The checker 404 is configured to check a status of the new node or a blockchain height of a ledger maintained by the new node.

When the status of the new node or the blockchain height of the ledger maintained by the new node meets a condition, the router 406 is configured to switch, to the new node, the traffic in the blockchain network intended for the new node but directed to the target node.

For example, the controller 402, the checker 404, and the router 406 may be implemented by using hardware, or may be implemented by using software.

When implemented by using software, the controller 402, the checker 404, and the router 406 may be application programs running on the compute device, for example, a computing engine. The application programs may be provided for users through a virtualization service. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, procedures, and resources. It should be understood that the VM service, the BMS service, and the container service in the virtualization service are merely specific examples. During actual application, the virtualization service may alternatively be another lightweight or heavyweight virtualization service. This is not specifically limited herein.

When implemented by using hardware, the controller 402, the checker 404, and the router 406 may include at least one compute device, such as a server. Alternatively, the controller 402, the checker 404, and the router 406 may be devices implemented by using an application-specific integrated circuit (application-specific integrated circuit, ASIC), or a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

In some possible implementations, the controller 402 is further configured to:
receive node configuration information of the public node pool, where the node configuration information includes at least one of a blockchain type, an image location, a ledger backup policy, or a ledger backup frequency;
create a shared node in the public node pool based on the node configuration information; and
determine a quantity of non-snapshot ledger nodes among the shared node, and configure a snapshot ledger node and a non-snapshot ledger node in the public node pool based on the quantity, where a service running on the snapshot ledger node is interrupted during generation of a ledger snapshot, and the non-snapshot ledger node normally runs a service.

In some possible implementations, the controller 402 is further configured to:
instruct the new node to copy a ledger snapshot from a storage snapshot pool corresponding to the public node pool and perform ledger synchronization based on the ledger snapshot, where the storage snapshot pool stores a ledger snapshot generated by the snapshot ledger node in the public node pool.

In some possible implementations, the controller 402 is further configured to:
receive a ledger synchronization manner of the new node configured by a user, where the ledger synchronization manner includes performing ledger synchronization based on a ledger snapshot.

In some possible implementations, the blockchain network further includes a user node pool, and the node creation request is used to create the new node in the user node pool.

In some possible implementations, the node creation request is used to create the new node in the public node pool, and the controller 402 is further configured to:
add traffic of the blockchain network to a shared transaction pool, where the shared transaction pool is configured with a quota for a user using the shared transaction pool, the quota indicates a maximum amount of traffic addable by the user to the shared transaction pool, and traffic in the shared transaction pool is routed to the target node in the public node pool.

In some possible implementations, the target node is a node whose load is less than a threshold or whose load ranks top n in ascending order, and n is a positive integer.

In some possible implementations, the controller 402 is further configured to:
receive a version update request, where the version update request is used to perform a version update on at least one node in the blockchain network; and
perform a version upgrade on the at least one node based on the version update request, and switch traffic of the at least one node to the target node.

The router 406 is further configured to:
when the version update of the at least one node is completed, switch, to the at least one node, the traffic in the blockchain network intended for the at least one node but directed to the target node.

In some possible implementations, the version update request is used to perform a version update on at least one node in the public node pool of the blockchain network.

The controller 402 is specifically configured to:
switch the traffic of the at least one node to a non-upgrade node that normally runs a service in the public node pool.

In some possible implementations, the checker 404 is further configured to:
monitor a blockchain height of a ledger maintained by a node in the public node pool, and when a difference between the blockchain height of the ledger maintained by the node in the public node pool and a blockchain height of a ledger maintained by the external node is greater than a first value, reset the ledger in the node and restore the ledger in the node based on the ledger snapshot.

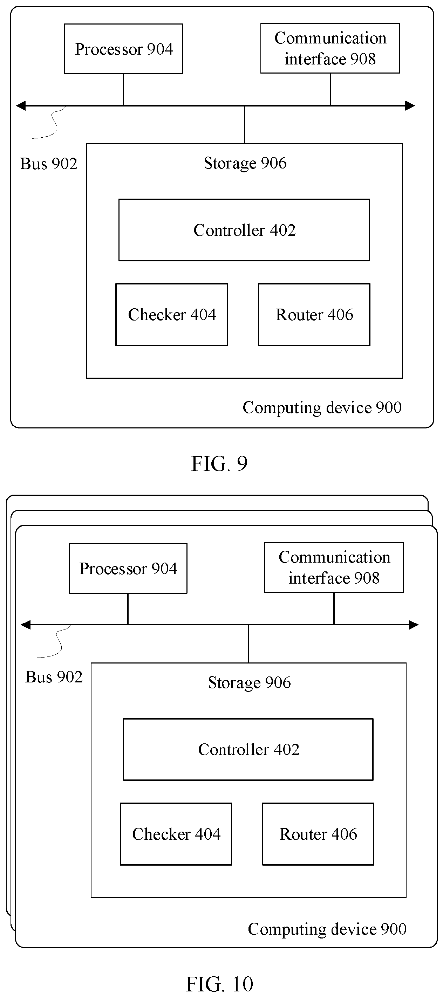

This application further provides a compute device 900. As shown in FIG. 9, the compute device 900 includes a bus 902, a processor 904, a storage 906, and a communication interface 908. The processor 904, the storage 906, and the communication interface 908 communicate with each other through the bus 902. The compute device 900 may be a server or a terminal device. It should be understood that quantities of processors and memories in the compute device 900 are not limited in this application.

The bus 902 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one line is used for representation in FIG. 9, but this does not mean that there is only one bus or only one type of bus. The bus 902 may include a path for transferring information between components (for example, the storage 906, the processor 904, and the communication interface 908) of the compute device 900.

The processor 904 may include any one or more of processors such as a central processing unit (central processing unit, CPU), a graphics processing unit (graphics processing unit, GPU), a microprocessor (microprocessor, MP), and a digital signal processor (digital signal processor, DSP).

The storage 906 may include a volatile memory (volatile memory), for example, a random access memory (random access memory, RAM). The storage 906 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 906 stores executable program code, and the processor 904 executes the executable program code to implement the management method for a blockchain network. Specifically, the storage 906 stores instructions used by the management system 400 for a blockchain network to perform the management method for a blockchain network.

The communication interface 908 uses a transceiver module, for example but not limited to, a network interface card or a transceiver, to implement communication between the compute device 900 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 10, the compute device cluster includes a plurality of compute devices 900. The storage 906 in the compute device 900 in the compute device cluster may store same instructions used by the management system 400 for a blockchain network to perform the management method for a blockchain network.

In some possible implementations, one or more compute devices 900 in the compute device cluster may alternatively be configured to execute a part of the instructions used by the management system 400 for a blockchain network to perform the management method for a blockchain network. In other words, a combination of the one or more compute devices 900 may jointly execute the instructions used by the management system 400 for a blockchain network to perform the management method for a blockchain network.

It should be noted that storages 906 in different compute devices 900 in the compute device cluster may store different instructions for executing some functions of the management system 400 for a blockchain network. For example, storages 906 of some compute devices 900 in the compute device cluster store instructions for executing functions of the controller 402, and storages 906 of other compute devices 900 in the compute device cluster store instructions for performing functions of the checker 404 and the router 406.

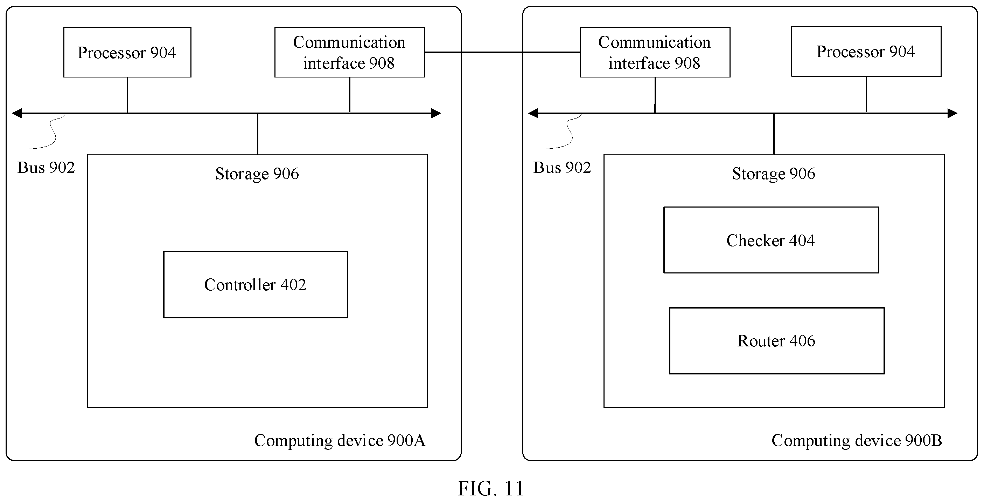

FIG. 11 shows a possible implementation. As shown in FIG. 11, two compute devices 900A and 900B are connected through the communication interface 908. A storage in the compute device 900A stores instructions for executing a function of the controller 402. A storage in the compute device 900B stores instructions for executing functions of the checker 404 and the router 406. In other words, the storages 906 in the compute device 900A and the compute device 900B jointly store instructions used by the management system 400 for a blockchain network to perform the management method for a blockchain network.

For a connection manner between compute device clusters shown in FIG. 11, that a status of a new node and a block height of a ledger maintained by the new node need to be checked for a relatively large quantity of resources in the management method for a blockchain network provided in this application may be considered. Therefore, it is considered that functions implemented by the checker 404 and the router 406 are executed by different compute devices.

It should be understood that functions of the compute device 900A shown in FIG. 11 may alternatively be completed by a plurality of compute devices 900. Similarly, functions of the compute device 900B may alternatively be completed by a plurality of compute devices 900.

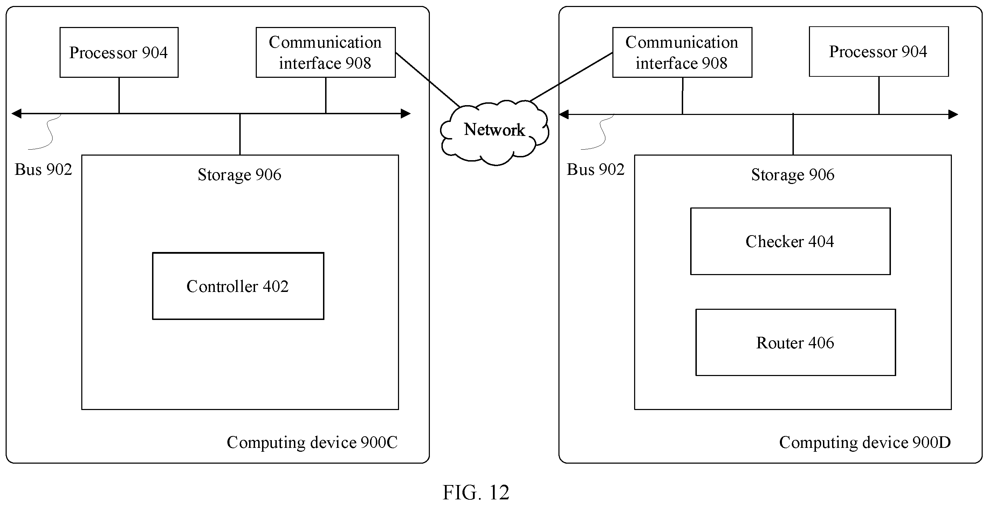

In some possible implementations, the one or more compute devices in the compute device cluster may be connected through a network. The network may be a wide area network, a local area network, or the like. FIG. 12 shows a possible implementation. As shown in FIG. 12, two compute devices 900C and 900D are connected through a network. Specifically, each compute device is connected to the network through a communication interface in the compute device. In such a possible implementation, a storage 906 in the compute device 900C stores instructions for executing a function of the controller 402. In addition, a storage 906 in the compute device 900D stores instructions for executing functions of the checker 404 and the router 406.

It should be understood that functions of the compute device 900C shown in FIG. 12 may alternatively be completed by a plurality of compute devices 900. Similarly, functions of the compute device 900D may alternatively be completed by a plurality of compute devices 900.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the compute device to perform the management method for a blockchain network applied to the management system 400 for a blockchain network.

An embodiment of this application further provides a computer program product including instructions. The computer program product may be software or a program product that includes the instructions and can run on a compute device or can be stored in any usable medium. When the computer program product runs on at least one compute device, the at least one compute device is caused to perform the management method for a blockchain network. An embodiment of this application further provides a computer program product including instructions. When the computer program product runs on at least one compute device, the at least one compute device is caused to perform the management method for a blockchain network.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A management method for a blockchain network, applied to a management system for a blockchain network, wherein the blockchain network comprises a public node pool and an external node, the management system comprises a controller, a checker, and a router, and the method comprises:
receiving, by the controller, a node creation request;
creating, by the controller, a new node in the blockchain network in response to the node creation request, and switching, to a target node in the public node pool, traffic intended for the new node, wherein the public node pool is configured to perform data presynchronization with the external node in the blockchain network, and the target node is a node that normally runs a service in the public node pool;
checking, by the checker, a status of the new node or a blockchain height of a ledger maintained by the new node; and
when the status of the new node or the blockchain height of the ledger maintained by the new node meets a condition, switching, by the router to the new node, the traffic in the blockchain network intended for the new node but directed to the target node.

2. The method according to claim 1, wherein the method further comprises:
receiving, by the controller, node configuration information of the public node pool, wherein the node configuration information comprises at least one of a blockchain type, an image location, a ledger backup policy, or a ledger backup frequency;
creating, by the controller, a shared node in the public node pool based on the node configuration information; and
determining, by the controller, a quantity of non-snapshot ledger nodes among the shared node, and configuring a snapshot ledger node and a non-snapshot ledger node in the public node pool based on the quantity, wherein a service running on the snapshot ledger node is interrupted during generation of a ledger snapshot, and the non-snapshot ledger node normally runs a service.

3. The method according to claim 1 or 2, wherein the method further comprises:
instructing, by the controller, the new node to copy a ledger snapshot from a storage snapshot pool corresponding to the public node pool and perform ledger synchronization based on the ledger snapshot, wherein the storage snapshot pool stores a ledger snapshot generated by the snapshot ledger node in the public node pool.

4. The method according to claim 3, wherein the method further comprises:
receiving, by the controller, a ledger synchronization manner of the new node configured by a user, wherein the ledger synchronization manner comprises performing ledger synchronization based on a ledger snapshot.

5. The method according to any one of claims 1 to 4, wherein the blockchain network further comprises a user node pool, and the node creation request is used to create the new node in the user node pool.

6. The method according to any one of claims 1 to 4, wherein the node creation request is used to create the new node in the public node pool, and the method further comprises:
adding, by the controller, traffic of the blockchain network to a shared transaction pool, wherein the shared transaction pool is configured with a quota for a user using the shared transaction pool, the quota indicates a maximum amount of traffic addable by the user to the shared transaction pool, and traffic in the shared transaction pool is routed to the target node in the public node pool.

7. The method according to claim 5 or 6, wherein the target node is a node whose load is less than a threshold or whose load ranks top n in ascending order, and n is a positive integer.

8. The method according to any one of claims 1 to 7, wherein the method further comprises:
receiving, by the controller, a version update request, wherein the version update request is used to perform a version update on at least one node in the blockchain network;
performing, by the controller, a version upgrade on the at least one node based on the version update request, and switching traffic of the at least one node to the target node; and
when the version update of the at least one node is completed, switching, by the router to the at least one node, the traffic in the blockchain network intended for the at least one node but directed to the target node.

9. The method according to claim 8, wherein the version update request is used to perform a version update on at least one node in the public node pool of the blockchain network; and
switching, by the controller, the traffic of the at least one node to the target node comprises:
switching, by the controller, the traffic of the at least one node to a non-upgrade node that normally runs a service in the public node pool.

10. The method according to any one of claims 1 to 9, wherein the method further comprises:
monitoring, by the checker, a blockchain height of a ledger maintained by a node in the public node pool, and when a difference between the blockchain height of the ledger maintained by the node in the public node pool and a blockchain height of a ledger maintained by the external node is greater than a first value, resetting the ledger in the node and restoring the ledger in the node based on the ledger snapshot.

11. A management system for a blockchain network, wherein the blockchain network comprises a public node pool and an external node, and the management system comprises a controller, a checker, and a router, wherein
the controller is configured to receive a node creation request;
the controller is further configured to create a new node in the blockchain network in response to the node creation request, and switch, to a target node in the public node pool, traffic intended for the new node, wherein the public node pool is configured to perform data presynchronization with the external node in the blockchain network, and the target node is a node that normally runs a service in the public node pool;
the checker is configured to check a status of the new node or a blockchain height of a ledger maintained by the new node; and
the router is configured to: when the status of the new node or the blockchain height of the ledger maintained by the new node meets a condition, switch, to the new node, the traffic in the blockchain network directed to the target node.

12. The system according to claim 11, wherein the controller is further configured to:
receive node configuration information of the public node pool, wherein the node configuration information comprises at least one of a blockchain type, an image location, a ledger backup policy, or a ledger backup frequency;
create a shared node in the public node pool based on the node configuration information; and
determine a quantity of non-snapshot ledger nodes among the shared node, and configure a snapshot ledger node and a non-snapshot ledger node in the public node pool based on the quantity, wherein a service running on the snapshot ledger node is interrupted during generation of a ledger snapshot, and the non-snapshot ledger node normally runs a service.

13. The system according to claim 11 or 12, wherein the controller is further configured to:
instruct the new node to copy a ledger snapshot from a storage snapshot pool corresponding to the public node pool and perform ledger synchronization based on the ledger snapshot, wherein the storage snapshot pool stores a ledger snapshot generated by the snapshot ledger node in the public node pool.

14. The system according to claim 13, wherein the controller is further configured to:
receive a ledger synchronization manner of the new node configured by a user, wherein the ledger synchronization manner comprises performing ledger synchronization based on a ledger snapshot.

15. The system according to any one of claims 11 to 14, wherein the blockchain network further comprises a user node pool, and the node creation request is used to create the new node in the user node pool.

16. The system according to any one of claims 11 to 14, wherein the node creation request is used to create the new node in the public node pool, and the controller is further configured to:
add traffic of the blockchain network to a shared transaction pool, wherein the shared transaction pool is configured with a quota for a user using the shared transaction pool, the quota indicates a maximum amount of traffic addable by the user to the shared transaction pool, and traffic in the shared transaction pool is routed to the target node in the public node pool.

17. The system according to claim 15 or 16, wherein the target node is a node whose load is less than a threshold or whose load ranks top n in ascending order, and n is a positive integer.

18. The system according to any one of claims 11 to 17, wherein the controller is further configured to:
receive a version update request, wherein the version update request is used to perform a version update on at least one node in the blockchain network; and
perform a version upgrade on the at least one node based on the version update request, and switch traffic of the at least one node to the target node; and
the router is further configured to:
when the version update of the at least one node is completed, switch, to the at least one node, the traffic in the blockchain network intended for the at least one node but directed to the target node.

19. The system according to claim 18, wherein the version update request is used to perform a version update on at least one node in the public node pool of the blockchain network; and
the controller is specifically configured to:
switch the traffic of the at least one node to a non-upgrade node that normally runs a service in the public node pool.

20. The system according to any one of claims 11 to 19, wherein the checker is further configured to:
monitor a blockchain height of a ledger maintained by a node in the public node pool, and when a difference between the blockchain height of the ledger maintained by the node in the public node pool and a blockchain height of a ledger maintained by the external node is greater than a first value, reset the ledger in the node and restore the ledger in the node based on the ledger snapshot.

21. A compute device cluster, wherein the compute device cluster comprises at least one compute device, the at least one compute device comprises at least one processor and at least one memory, the at least one memory stores computer-readable instructions, and the at least one processor executes the computer-readable instructions, to enable the compute device cluster to perform the method according to any one of claims 1 to 10.

22. A computer-readable storage medium, comprising computer-readable instructions, wherein the computer-readable instructions are used to implement the method according to any one of claims 1 to 10.

23. A computer program product, comprising computer-readable instructions, wherein the computer-readable instructions are used to implement the method according to any one of claims 1 to 10.
